Europäisches Patentamt

European Patent Office

Office européen des brevets

(19)

(11) Publication number: **0 365 014**
**A1**

## EUROPEAN PATENT APPLICATION

(21) Application number: **89119436.7**

(51) Int. Cl.5: **A47J 27/04**

(22) Date of filing: **19.10.89**

(30) Priority: **21.10.88 JP 264006/88**

(43) Date of publication of application:
**25.04.90 Bulletin 90/17**

(84) Designated Contracting States:
**DE FR GB**

(71) Applicant: **DOWA CO., LTD.**
**14-10, Yakumo-3-chome**
**Meguro-ku Tokyo(JP)**

(72) Inventor: **Miyahara, Kingo**
**14-10, Yakumo-3-chome**
**Meguro-ku Tokyo(JP)**

(74) Representative: **Patentanwälte Grünecker,**
**Kinkeldey, Stockmair & Partner**
**Maximilianstrasse 58**
**D-8000 München 22(DE)**

(54) Method of cooking foods by warming or heating and apparatus for the same.

(57) An apparatus for cooking foods by subjecting the foods to warming or heating. A closed-end insulating container (1) is provided with a removable cover (2) at the upper portion thereof. The inside of the container defines a steaming chamber (3), and a boiling chamber (4) capable of receiving therein a solution of electrolyte (A) is provided on that side of the container which is close to the bottom of the inside thereof. The boiling chamber is provided with a pair of electrodes (5, 6) capable of causing the boiling of the sclution of the electrolyte received in the boiling chamber.

FIG.1

EP 0 365 014 A1

# METHOD OF COOKING FOODS BY WARMING OR HEATING AND APPARATUS FOR THE SAME

## BACKGROUND OF THE INVENTION

The present invention relates to a method of cooking foods in which foods that may be packaged or unpackaged are subjected to the application of heat for a very short period of time, e.g., to steaming or to warming or heating, so as to prepare them to be served. The present invention also relates to an apparatus for carrying out the method.

Japanese Patent Laid-Open No. 63-240753 discloses a method of and an apparatus for preparing and processing foods by utilizing electric heating. In this method, a food material, which may be any food material desired, such as polished rice or wheat, is received within a closed-end insulating container while submerged in water. The food material is then subjected to treatment with heat for a short period of time by heated water and bubble vapor resulting from the action of a pair of electrodes provided in the bottom portion of the container and supplied with electricity. In this way, this method makes it possible for flavorful and tasty foods to be served.

However, methods of and apparatuses for preparing and processing foods by utilizing electric heating, such as that described above, involve the following drawback. A food material is received in a closed-end insulating container while it is submerged in water at first. Although this allows the food material to be then subjected to treatment with heat by heated water and bubble vapor resulting from the action of a pair of electrodes provided in the bottom portion of the container and supplied with electricity, while allowing this process to be completed within a very short period of time, this arrangement simultaneously requires a relatively great amount of dilute salt water. As a result, a considerably long period of time passes before the dilute salt water comes to the boil, inevitably making the overall time required rather too long for a food material to be heated and cooked within a short period of time.

## SUMMARY OF THE INVENTION

The present invention has been accomplished in view of the drawback of the prior art. The present invention is directed to the provision of a method of and an apparatus for cooking foods by subjecting the foods to warming or heating, in which a closed-end insulating container having a steaming chamber defined therein and a pair of electrodes provided in the bottom portion thereof is specially provided with a boiling chamber receiving a relatively small mount of a solution of an electrolyte, the relatively small amount of solution of the electrolyte is caused to boil within a short period of time by the action of the pair of electrodes between which the flow of current occurs, and a food material received in the steaming chamber is quickly warmed or heated by the heat of steam generated by the boiling, the method and apparatus of the present invention thus being capable of cooking a food material quickly.

A method of cooking foods by subjecting the foods to warming or heating, according to the present invention comprises the steps of: preparing a closed-end insulating container having a steaming chamber defined therein, a pair of electrodes provided in the bottom portion of the container, and a boiling chamber receiving therein a solution of electrolyte, the steaming chamber being positioned above the boiling chamber; placing a food material to be cooked within the steaming chamber; causing the solution of the electrolyte to boil quickly by the action of the pair of electrodes between which the flow of current occurs; and warming or heating the food material by the heat of steam generated by the boiling so as to cook the food material.

An apparatus for cooking foods by subjecting the foods to warming or heating, according to the present invention comprises: a closed-end insulating container: and a removable cover at the upper portion thereof, the container having a steaming chamber defined therein, a boiling chamber which is provided on that side of the container that is close to the bottom of the inside thereof and which is capable of receiving therein a solution of electrolyte, and a pair of electrodes provided in the boiling chamber and capable of causing the boiling of the solution of the electrolyte received in the boiling chamber. Advantageous effects are provided if a food material is received within the steaming chamber while being received in a net or basket allowing the heat of steam to pass therethrough.

In the method of the present invention, the container prepared may further has a closed-end inner container which is provided within the steaming chamber above the boiling chamber and which is capable of receiving a food material therein, so that the food material may be cooked by being warmed or heated by the heating action of the heat of steam generated by boiling. In order to cook a food material in this manner, the above-specified apparatus of the present invention may further comprise a closed-end inner container which is provided within the steaming chamber and which is capable of receiving a food material therein.

The closed-end inner container may preferably be provided with a removable cover at the upper portion thereof.

The closed-end inner container provided within the steaming chamber may preferably have an annular opening, or a plurality of openings formed around the upper portion thereof that is on the side where the inner container opens, the openings allowing steam to pass therethrough.

The closed-end inner container may preferably have a vertically extending cylindrical passage provided at a substantially central location thereof, the passage allowing steam to ascend therethrough and communicating with the steaming chamber.

BRIEF DESCRIPTION OF THE DRAWINGS

Fig. 1 is a vertical sectional view of an apparatus for cooking foods by subjecting the foods to warming and heating, the apparatus being one embodiment of the apparatus of the present invention and being used to carry out one form of the method of the present invention;

Fig. 2 is a plan view of a pair of electrodes and a support of the apparatus shown in Fig. 1;

Fig. 3 is a view corresponding to Fig. 1, showing another embodiment of the present invention;

Fig. 4 is a plan view of a pair of electrodes and a support of the apparatus shown in Fig. 3;

Fig. 5 is a view corresponding to Fig. 1, showing still another embodiment of the present invention;

Fig. 6 is a view corresponding to Fig. 1, showing a further embodiment of the present invention where a food material comprising "instant" noodles, a kind of fast food, and a soup is cooked by being warmed or heated;

Fig. 7 is a view corresponding to Fig. 1, showing an embodiment of the present invention where an apparatus which is basically the same as the apparatus shown in Fig. 6 is utilized to cook, by warming or heating, a food material comprising a rice-cooking material such as rice or processed rice and water; and

Fig. 8 is a view corresponding to Fig. 1, showing a still further embodiment of the present invention.

DESCRIPTION OF THE PREFERRED EMBODIMENTS

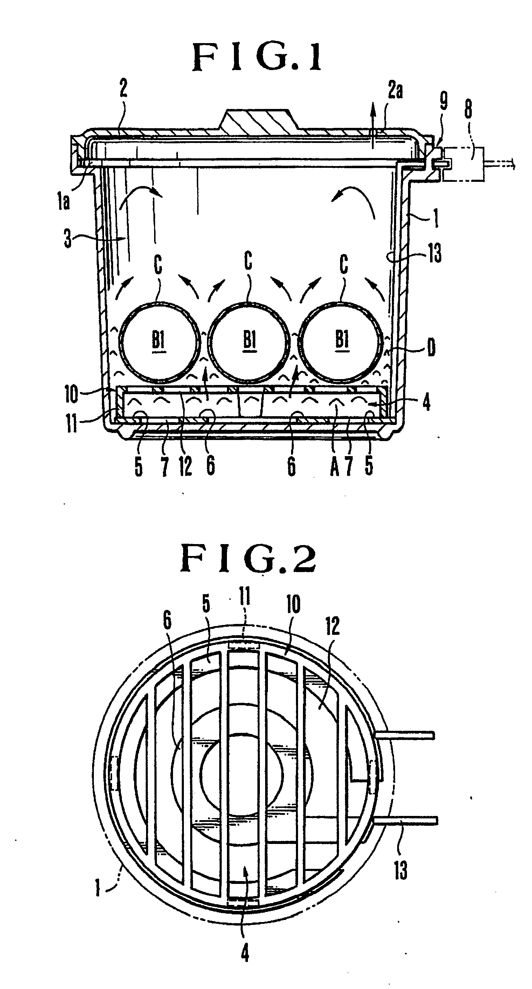

Figs. 1 and 2 are views showing an embodiment of the apparatus for cooking foods by subjecting the foods to warming or heating, according to the present invention. The apparatus includes a closed-end insulating container 1 which opens at the upper end thereof and defines a steaming chamber 3 therein. A flange 1a is provided around the open end of the closed-end insulating container 1. Most preferably, the entire structure of the closed-end insulating container 1 should be formed of a heat-resisting resin material. However, if the container 1 is to be used as a disposable container, it may be alternatively formed of an inexpensive material such as heat-resisting insulating water-proof paper or a molded foaming synthetic resin material. The material used to form the container 1 as well as the cross-sectional configuration of the same (e.g., a circular configuration), and other factors concerning the container 1 can be arbitrarily selected.

A cover 2 is provided to cover the opening at the upper end of the closed-end insulating container 1, and is removable therefrom. A steam escape hole 2a opens through a suitable portion of the cover 2. The steaming chamber 3 occupies the majority of the inside of the closed-end insulating container 1, while a bottom portion of the inside of the container 1 is formed as a boiling chamber 4. At the bottom of the boiling chamber 4, a pair of annular electrodes 5 and 6, which are in the form of thin plates, are concentrically provided, with an electrode space 7 provided therebetween.

The pair of electrodes 5 and 6 are formed of a electrically conducting material. If a metallic material is to be used, it may be selected from among such materials as thin plates, bar materials and sheets of titanium, aluminum or the like, and such sheets having their surfaces laminated with synthetic resin films. Other materials which may be used include carbon materials and resins containing carbon. The material and the configuration of the electrodes 5 and 6 can be arbitrarily selected.

A plug 8 is provided to supply electricity to the electrodes 5 and 6 within the closed-end insulating container 1 via a lead 13. A plug receiving portion 9 is provided on the edge around the opening at the upper end of the closed-end insulating container 1, as shown in Figs. 1 and 2. If the plug 8 and the plug receiving portion 9 are members of, for instance, magnet type commonly employed in various equipment, they can be engaged with or disengaged from each other easily.

A suitable amount of a solution A of an electrolyte is received within the boiling chamber 4. A preferred example of the electrolyte solution A is dilute salt water which is received in the boiling chamber 4 in such an amount that the electrodes 5 and 6 are adequately submerged in the solution A.

A support 10 is disposed in the boiling chamber 4. The support 10 is formed by molding, e.g., a heat-resisting insulating synthetic resin. The support 10 has a large number of windows 12 opening through the surfaces thereof so that the support 10 is roaster-shaped. The support 10 also has a suitable number of vertically extending legs 11. Denoted at symbol B1 is a food material placed upon the support 10 within the steaming chamber 3. The embodiment shown in Fig. 1 illustrate the case where the food material B1 is a fish or meat paste product packaged in a packaging material C such as a plastic film.

The height of the support 10 is determined in such a manner that a food material placed upon the support 10 will not be directly submerged in the electrolyte solution A. Denoted at symbol D is particles of steam generated by boiling.

An apparatus such as that shown in Figs. 1 and 2 is used in the following manner to cook, by warming or heating for a short period of time, a food material which may be either packaged in a suitable packaging body and with any desired configuration, or unpackaged. First, a closed-end insulating container 1 is prepared, which container has a steaming chamber 3 defined therein, a pair of electrodes 5 and 6 provided in the bottom portion of the container 1, and a boiling chamber 4 receiving therein a solution A of an electrolyte, as shown in Figs. 1 and 2. Subsequently, a food material B1, packaged or unpackaged, is placed within the steaming chamber 3 above the boiling chamber 4 in such a manner that the food material B1 is not submerged in the electrolyte solution A. Thereafter, the upper end at which the closed-end insulating container 1 opens is covered with a cover 2 and closed thereby.

When the above-described operations are completed, electricity is supplied to the pair of electrodes 5 and 6 so that, as the flow of current occurring therebetween increases gradually, the electrolyte solution A quickly comes to the boil and boils up. As a result, steam is generated by the boiling, and the steam forms steam particles D which are discharged from the boiling chamber 4 to fill the steaming chamber 3, whereby the food material B1 is warmed or heated by the heating action of the heat of the steam generated by the boiling, so as to cook the food material B1 in a prescribed manner and ·within a short period of time.

Therefore, with the apparatus shown in Figs. 1 and 2, since only a small amount of an electrolyte solution A is required, it is possible to cause steam forming steam particles D to be generated by boiling within a short period of time. Accordingly, it is possible to cook a food material B1 by warming or heating the food material for a very short period of time.

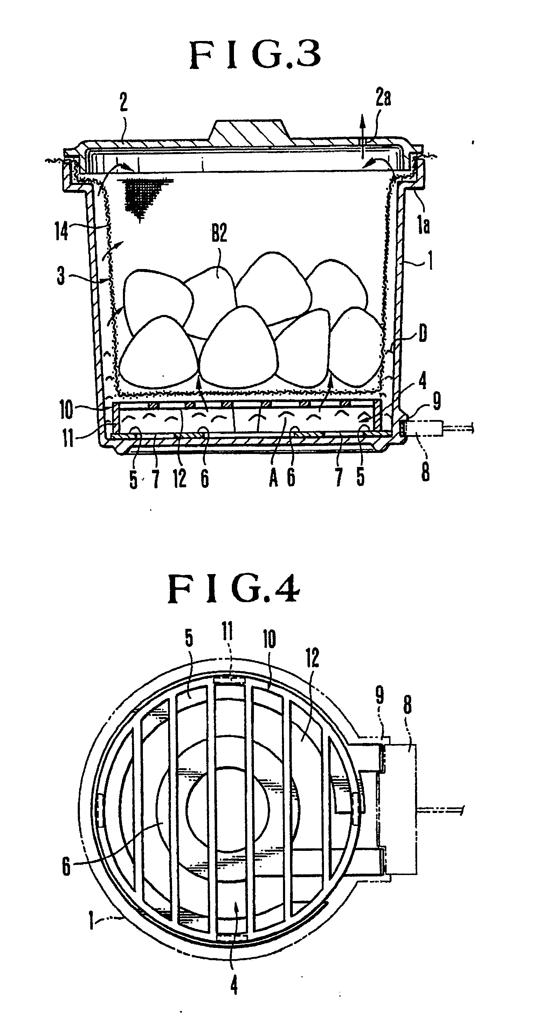

Figs. 3 and 4 show an apparatus for cooking foods by subjecting the foods to warming or heating, according to another embodiment of the present invention. This apparatus is exactly the same as the apparatus of the previous embodiment shown in Figs. 1 and 2, except that an unpackaged food material B2 is received in a net 14 which allows free passage therethrough of the heat of steam generated by boiling, and that the plug receiving portion 9 capable of engaging with a plug 8 is provided on the lower portion of the closed-end insulating container 1.

The net 14 is formed of a piece of woven fabric or a formed synthetic resin. The edge portion of the net 14 around its opening projects outwardly from the flange 1a of the closed-end insulating container 1. The net 14 is formed with a flexible net-shaped configuration so that the food material B2 will be exposed to the heat of steam generated by boiling within the boiling chamber 4 and then freely passing through the net 14. The net 14 is also arranged in such a manner that, when the cooking of the food material B2 by the application of heat thereto is completed, the net 14 is taken out from the closed-end insulating container 1 while the net 14 still receives the food material B2.

Although Fig. 3 illustrates the case where the unpackaged food material B2 is, e.g., vegetables, beans, or peas, the food material B2 may alternatively be a different food material, packaged or unpackaged. For instance, the food material B2 may be a mixture of instant noodles and a soup, a mixture of a rice-cooking material such as rice or processed rice and water, or food which may often be served with the principal food, such as curry sauce. Examples of the food material B2 also include cooked foods and steamed cakes.

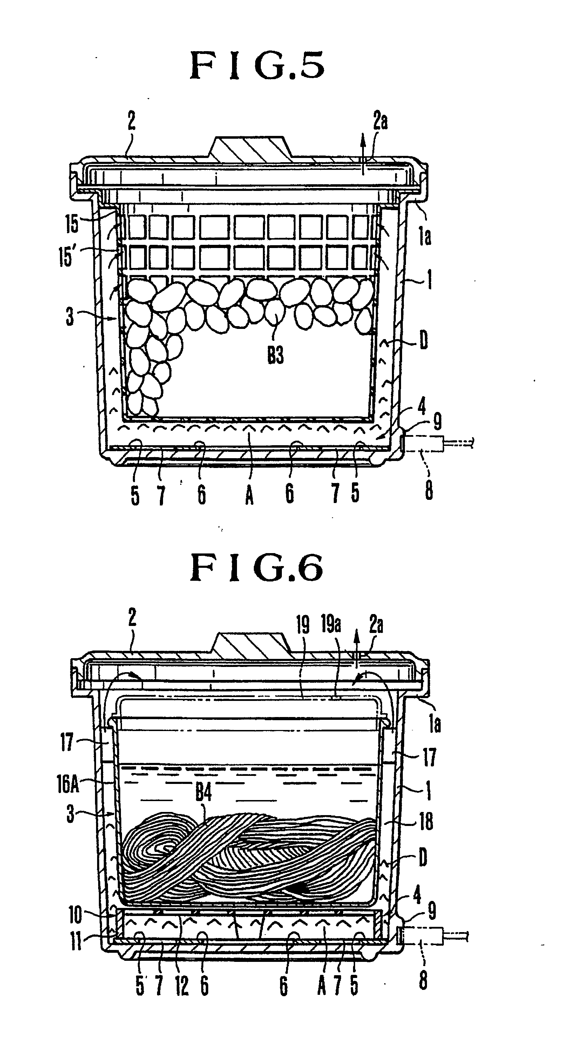

Fig. 5 shows an apparatus for cooking foods by subjecting the foods to warming or heating, according to a still another embodiment of the present invention. This apparatus is exactly the same as the apparatus of the previous embodiment shown in Figs. 3 and 4, except that the net 14 is substituted with a basket 15 having a large number of windows 15' formed through the peripheral surfaces thereof, the basket 15 being received in the steaming chamber 3 while in the state of being suspended. The basket 15 has its entire structure formed using, e.g., a synthetic resin, and is capable of being received while being suspended with its edge portion around its upper opening being disposed on the flange 1a of the closed-end insulating container 1. In this embodiment, therefore, the boiling chamber 4 is positioned below the basket 15, thereby making it possible to omit the support 10 shown in Figs. 1 and 3. Similarly to the case of the net 14 used in the embodiment shown in Fig.3, the use of the basket 15 allows the heat of steam generated by boiling to pass through the large number of windows 15' and then be introduced into the basket 15, and also allows a food material B3 to be taken out from the casing 1 with ease.

As in the embodiment shown in Figs. 3 and 4, or Fig. 5, if a food material B2 or B3, packaged or unpackaged, is received in a net 14 or basket 15 which allows free passage therethrough of the heat of steam, and the net 14 or basket 15 receiving therein the food material B2 or B3 is in turn received in the steaming chamber 3, steam particles D of steam generated by boiling caused within the boiling chamber 4 by the action of the pair of electrodes 5 and 6 supplied with electricity are quickly introduced into the net 14 or basket 15, so that the heat of the steam generated by the boiling acts to warm or heat the food material B1 or B2 so as to cook it within a short period of time.

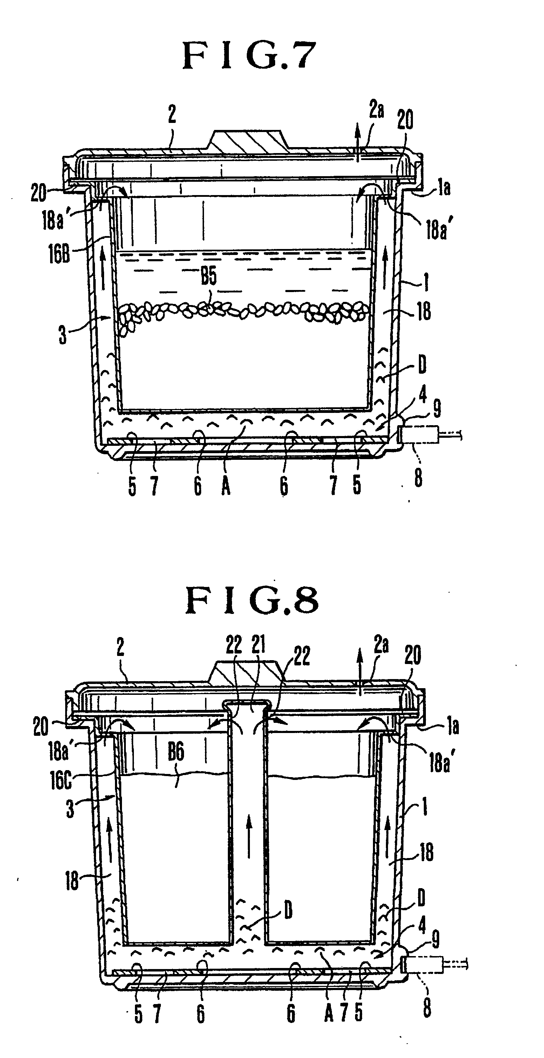

Figs. 6 to 8 show apparatuses for cooking foods by subjecting the foods to warming or heating, according to further embodiments of the present invention. Each of the apparatuses includes a closed-end insulating container 1 and a removable cover 2 provided to cover and close the upper open portion of the container 1. The container 1 has a steaming chamber 3 defined therein, a pair of electrodes 5 and 6 provided in the bottom portion of the container 1, and a boiling chamber 4 receiving an electrolyte solution A. A support 10 is provided in the boiling chamber 4, with its legs 11 vertically extending.

In the embodiment shown in Fig. 6, a closed-end inner container 16A opening at its upper end is disposed upon the support 10 in such a manner as to be received within the steaming chamber 3. The closed-end inner container 16A is capable of receiving therein a food material B4 comprising, in the illustrated example, instant noodles and a soup. A plurality of supporting projections 17 are provided at upper portions of the inner wall of the steaming chamber 3, so that the closed-end inner container 16A received in the steaming chamber 3 is accurately received and supported. A steam-ascending passage 18 is formed in the gap between the inner wall of the closed-end insulating container 1 and the outer wall of the closed-end inner container 16A. The steam-ascending passage 18 communicates, at its lower end, with the boiling chamber 4 and, at its upper end, with the steaming chamber 3, and allows steam to ascend therethrough. An annular steam escape opening 18a formed around the upper open side of the inner container 16A, so that steam from said steam-ascending passage 18, passes therethrough.

The closed-end inner container 16A shown in Fig. 6 may be provided with a cover 19 when required, the cover 19 being provided on the upper open side of the inner container 16A in such a manner as to be removable. A steam escape hole 19a of a suitable size is formed through the cover 19.

In the embodiment shown in Fig. 7, the support 10 as well as the supporting projections 17 are omitted. Instead, a flange 20 for suspending a closed-end inner container 16B is provided around the upper opening of the container 16B. When the closed-end inner container 16B receives therein a food material B5 comprising, e.g., a rice-cooking material such as rice or processed rice and water, the flange 20 is disposed upon the flange 1a of the closed-end insulating container 1, whereby the inner container 16B with the food material B5 is received in the steaming chamber 3 while in the condition of being suspended. A plurality of steam escape openings 18a' open through the surfaces of the flange 20 of the closed-end inner container 16B, and a steam-ascending passage 18 is formed in the gap between the closed-end insulating container 1 and the closed-end inner container 16B, so that steam generated by boiling within the boiling chamber 4 will ascend through the steam-ascending passage 18, passes through the steam escape openings 18a', and then flows into the closed-end inner container 16B.

The embodiment shown in Fig. 8 is distinguished from the embodiment shown in Fig. 7 in that a closed-end inner container 16C is used. This container 16C is the same as the container 16B used in the embodiment shown in Fig. 7 except that the container 16C also has a cylindrical steam-ascending passage 21 vertically extending through the container 16C and communicating with the steaming chamber 3, the passage 21 being provided at a substantially central location of the closed-end inner container 16C. The lower end of the steam-ascending passage 21 communicates with the boiling chamber 4. A suitable number of steam escape holes 22 open through upper portions of the steam-ascending passage 21 in such a manner that the holes 22 communicate with the inside of the closed-end inner container 16C.

In the embodiment shown in Fig. 8, therefore, steam generated by boiling ascends and flows not only over the outer peripheral wall of the closed-end inner container 16C but also through a central location of the container 16C. This is advantageous in that a food material B6, e.g., food such as curry sauce, can be warmed or heated, or cooked more quickly by the heat of steam generated by the boiling, from both inside and outside of the inner container 16C.

An apparatus for cooking foods by subjecting the foods to warming or heating, such as that shown in any of Figs. 6 to 8, is used in the following manner to cook, by warming or heating for a short period of time, a food material B4, B5, or B6, packaged or unpackaged. First, a closed-end insulating container 1 is prepared, which container has a steaming chamber 3 defined therein, a pair of electrodes 5 and 6 provided in the bottom portion of the container 1, and a boiling chamber 4 receiving therein a solution A of an electrolyte A. The above-described operation is the same as the corresponding operation in the case where the apparatus of the embodiment shown in any of Figs. 1 to 5 is used. Subsequently, a closed-end inner container 16 receiving therein a food material B4, B5 or B6 is placed within the steaming chamber 3 above the boiling chamber 4 in such a manner that, in the case of the apparatus shown in Fig. 6, an inner container 16A is received through the intermediary of the support 10, whereas in the case of the apparatus shown in Fig. 7 or 8, an inner container 16B or 16C is disposed while being suspended. During this operation, the amount of the electrolyte solution A is adjusted to such an amount that the bottom of the closed-end inner container 16A, 16B or 16C is not submerged in the electrolyte solution A. Thereafter, the upper end at which the closed-end insulating container 1 opens is covered with and closed by a cover 2.

When the above-described operations are completed, electricity is supplied to the pair of electrodes 5 and 6 so that, as the flow of current therebetween increases gradually, the electrolyte solution A is quickly caused to boil, resulting in the generation of steam. The steam forms steam particles D which are discharged from the boiling chamber 4, flow over the outer periphery of the closed-end inner container 16A, 16B or 16C to fill the steaming chamber 3, whereby the entire closed-end inner container 16 is warmed or heated from the outer side thereof by the heating action of the heat of the steam generated by the boiling, which in turn causes the food material B4, B5 or B6 received in the inner container 16 to be warmed or heated so as to be cooked within a short period of time.

When it is desired that the food material B4, B5 or B6 received within the closed-end inner container 16A, 16B or 16C should be cooked by being indirectly warmed or heated by the heat of steam generated by boiling, the upper open end of the inner container 16A is closed by the cover 19, as in the case of the apparatus shown in Fig. 6. If an annular steam escape opening 18a is formed around the upper open end of the closed-end inner container 16A, or a plurality of steam escape openings 18a' are formed around the upper open end of the closed-end inner container 16B or 16C received within the steaming chamber 3, as in the case of the apparatus shown in Fig. 6, 7 or 8, part of steam generated by boiling is introduced into the closed-end inner container 16A, 16B or 16C through the opening 18a or openings 18a' on the upper open side of the inner container 16. In this case, the food material is heated by both indirect and direct heating actions, thereby making it possible to cook, by warming or heating, the food material within a curtailed period of time.

As in the case of apparatus shown in Fig. 8, if the closed-end inner container 16C has, at a substantially central location thereof, a cylindrical steam-ascending passage 21 vertically extending and communicating, at the upper end thereof, with the steaming chamber 3 and communicating, at the lower end thereof, with the boiling chamber 4, the food material received B6 can be cooked within a further curtailed time by warming or heating the food material by the heat of steam generated by boiling.

The electrolyte solution A used in the apparatus for cooking foods by subjecting the foods to warming or heating, according to any of the above-described embodiments is such that, if substantially all the electrolyte solution A evaporates as time passes, the flow of current between the pair of electrodes is automatically interrupted. In addition, if the amount of the received electrolyte solution A is adjusted, it is possible to set the electricity supply period to various values. It is also possible to vary the demand. That is, if the electrolyte solution A has a high electrolyte concentration, a correspondingly large amount of electricity is supplied, whereas if that concentration is low, a correspondingly small amount of electricity is supplied. Therefore, if that concentration is set at a predetermined value beforehand, it is possible to set the electricity supply amount at any desired value, thereby eliminating the need for any controller to be provided.

The present invention, providing the above-described method and apparatus, enables the achievement of the following advantageous effects.

By virtue of the arrangement where the space defined by substantially all the inside of the closed-end insulating container forms a steaming chamber, while a relatively small space on the side close to the bottom of the closed-end insulating container is formed as a boiling chamber, and such a small amount of a solution of an electrolyte is received within the boiling chamber that a pair of electrodes are submerged in the electrolyte solution, when the flow of current occurs between the pair of electrodes, the electrolyte solution can be brought to the boil within a short period of time at a speed which is considerably greater than that conventionally possible, while a relatively larger volume of a food material can be received, thereby enhancing the efficiency of one cooking (warming or heating) operation.

. Further, if a food material is received in a closed-end inner container which is in turn received in the steaming chamber, this arrangement is advantageous in that, in contrast with conventional methods and apparatuses, it is possible to cook the food material by warming or heating the same indirectly by the heat of steam generated by boiling through the intermediary of the closed-end inner container, while the food material is kept from coming into direct contact with the electrolyte solution. Consequently, liquid-form food materials, such as soups, broths, milk, which have hitherto been warmed or heated only with difficulty, as well as steamed or processed food materials and foods often served together with the principal food can be processed with ease. In addition, food materials can be cooked by being warmed or heated, regardless of their contents, and whether they are packaged or unpackaged, within a very short period of time and with a small demand. If the materials for forming such members as the closed-end insulating container, the pair of electrodes, and the closed-end inner container are suitably selected and used, it is possible to use the method and the apparatus of the present invention to cook instant foods.

Furthermore, if a food material is received in a net or basket through which the heat of steam can freely pass, the transportation of the food into and out of the closed-end insulating container can be easily performed, while the cooking can be performed quickly by directly warming or heating the food material by the heat of steam generated by boiling.

Still further, if the closed-end inner container is provided with a removable cover at the upper portion of the container, it is possible to cook a food material received in the closed-end inner container by warming or heating the food material in either of two ways, i.e., indirectly or directly, in accordance with the condition, i.e., applied or not applied, of the cover.

Still further, if an annular steam-escaping opening or a plurality of steam escape openings are formed around the upper opening of the closed-end inner container received in the steaming chamber, or if a cylindrical steam ascending passage which vertically extends and communicates with the steaming chamber is formed at a substantially central location of the closed-end inner container, a food material received in the closed-end inner container can be cooked within a short period of time by both the indirect warming or heating action and the direct warming or heating action of the heat of steam generated by boiling.

## Claims

1. A method of cooking foods by subjecting the foods to warming or heating, comprising the steps of: preparing a closed-end insulating container (1) having a steaming chamber (3) defined therein, a pair of electrodes (5, 6) provided in the bottom portion of the container, and a boiling chamber (4) receiving therein a solution of electrolyte (A), the steaming chamber being positioned above the boiling chamber; placing a food material (B1~B6) to be cooked within the steaming chamber; causing the solution of electrolyte to boil quickly by the action of the pair of electrodes between which the flow of current occurs; and warming or heating the food material by the heat of steam generated by the boiling so as to cook the food material.

2. A method according to claim 1, wherein the container further has a closed-end inner container (16A, 16B, 16C) provided within the steaming chamber above the boiling chamber, said closed-end inner container being capable of receiving a food material therein.

3. An apparatus for cooking foods by subjecting the foods to warming or heating, comprising: a closed-end insulating container (1): and a removable cover (2) at the upper portion thereof, said container having a steaming chamber (3) defined therein, a boiling chamber (4) which is provided on the side of said container that is close to the bottom of the inside thereof and which is capable of reciving therein a solution of electrolyte (A), and a pair of electrodes (5, 6) provided in said boiling chamber and capable of causing the boiling of the solution of electrolyte received in said boiling chamber.

4. An apparatus according to claim 3, wherein said container further has a net (14) or basket (15) provided in said steaming chamber, said net or basket being capable of receiving therein a food material (B1, B2) and allowing the heat of steam to pass therethrough.

5. An apparatus according to claim 3, wherein said container further has a closed-end inner container (16A, 16B, 16C) provided within said steaming chamber above said boiling chamber, said closed-end inner container being capable of receiving a food material therein.

6. An apparatus according to claim 5, wherein said closed-end inner container (16A) is provided with a removable cover (19) at the upper portion thereof.

7. An apparatus according to claim 5, wherein said closed-end inner container (16B, 16C) provided within said steaming chamber has a plurality of openings (18a') formed around the upper portion thereof that is on the side where said inner container opens, said openings allowing steam to pass therethrough.

8. An apparatus according to claim 5, wherein said closed-end inner container (16A) provided within said steaming chamber has an opening 18a formed around the upper portion thereof that is on the side where said inner container opens, said openings allowing steam to pass therethrough.

9. An apparatus according to claim 5, wherein said closed-end inner container (16C) has a vertically extending cylindrical passage (21) provided at a substantially central location thereof, said passage allowing steam to ascend therethrough and communicating with said steaming chamber.

10. An apparatus according to claim 5, wherein said closed-end inner container (16C) has a vertically extending cylindrical passage (21) provided at a substantially central location thereof, said passage allowing steam to ascend therethrough and communicating with said steaming chamber.

# FIG.1

# FIG.2

# FIG.3

# FIG.4

# FIG.5

# FIG.6

EP 0 365 014 A1

# FIG.7

# FIG.8

# EUROPEAN SEARCH REPORT

European Patent Office

Application Number

EP 89 11 9436

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,X | WO-A-8909010 (SOCIETE NOUVELLE VIVALP)<br>* page 4, line 16 - page 7, line 21; figures 1-4 * | 1-6, 9, 10 | A47J27/04 |
| X | US-A-3902044 (DOYLE)<br>* the whole document * | 1, 3 | |
| X | GB-A-2198631 (KENWOOD LTD.)<br>* page 2, line 21 - page 3, line 5; figure 1 * | 1, 3, 4 | |
| A | US-A-4574776 (HIDLE)<br>* the whole document * | 1-8 | |
| A | US-A-4164174 (WALLSTEIN)<br>* column 6, lines 11 - 65; figure 3 * | 1, 3, 4 | |
| A | CH-A-358211 (FRITSCH & CO)<br>* the whole document * | 1-3, 5, 9, 10 | |

TECHNICAL FIELDS SEARCHED (Int. Cl.5)

A47J

The present search report has been drawn up for all claims

| Place of search | Date of completion of the search | Examiner |
|---|---|---|
| THE HAGUE | 30 JANUARY 1990 | MEINDERS H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)